# EUROPEAN PATENT APPLICATION

(11) **EP 4 349 930 A1**
(43) Date of publication of application: **10.04.2024**
(21) Application number: 22811237.1
(22) Date of filing: 19.05.2022
(51) Int. Cl.: C09J 4/00, C08F 290/06, C09J 11/06

(54) **HEAT-RESISTANT ACRYLIC ADHESIVE COMPOSITION**

(30) Priority: 25.05.2021 JP 2021087954
(71) Applicant: Cemedine Co., Ltd., Tokyo 141-8620 (JP)
(72) Inventor: KOTANI, Jun, Tokyo 141-8620 (JP); KONNO, Makoto, Tokyo 141-8620 (JP)
(74) Representative: Grünecker Patent- und Rechtsanwälte PartG mbB
(86) International application number: PCT/JP2022/020781
(87) International publication number: WO 2022/249965

(57) **Abstract**

An object of the present invention is to provide an acrylic adhesive having excellent high-temperature adhesive strength and excellent cured product elongation. Accordingly, provided is a two-part acrylic adhesive composition including, as essential components, (A) a urethane (meth)acrylate having a backbone including a low-crystallinity polytetramethylene glycol, (B) a polymerizable vinyl monomer, (C) an organic peroxide, and (D) a reducing agent.

## Description

### Technical Field

The present invention relates to acrylic adhesives. In particular, the present invention relates to an acrylic adhesive having excellent high-temperature adhesive strength and excellent cured product elongation.

### Background Art

Among acrylic adhesives that react and cure at ambient temperatures are two-part acrylic adhesives including a peroxide and a decomposition accelerator therefor, which are mixed to cause reaction and curing. Such adhesives are known as second-generation acrylic adhesives (SGA). The second-generation acrylic adhesives have advantages, such as the short time it takes for adhesive strength to be exhibited, a wide range of permissible mixing ratios for the components, and excellent adhesion to a variety of materials, such as metals and plastics. Accordingly, the second-generation acrylic adhesives are widely used in various fields, such as electricity, machinery, automobiles, construction, and civil engineering.

While the second-generation acrylic adhesives are characterized by good heat resistance as compared with other adhesives, there has been an increasing demand for higher heat resistance in recent years. Patent Literature 1 addresses the problem and proposes adding, to an acrylic adhesive, a liquid rubber having a polymerizable unsaturated double bond at an end. However, as described in Patent Literature 2, problems exist in that if a large amount of a liquid rubber is added, a viscosity of the adhesive increases, which hinders favorable application of the adhesive to an adherend; in addition, since liquid rubbers have poor compatibility with acrylic monomers, the composition separates over time, which results in significantly degraded adhesive performance.

Patent Literature 3 proposes a technique for improving heat resistance by using a maleimide compound as a portion of the monomers. However, the effect of the technique is not sufficient, and in addition, the technique presents a problem in that the use of a maleimide compound tends to excessively increase a modulus of elasticity of the adhesive, and, consequently, for instance, when different types of substrates having different coefficients of linear expansion are bonded, deformation occurs, which causes delamination.

Patent Literature 4 addresses the problems and proposes a technique for improving high-temperature adhesive strength by adding titanium oxide having an average particle size of less than or equal to 5.0 um to an adhesive composition. However, the effect of the technique is not sufficient.

Patent Literature 5 discloses a composition that includes a combination of a urethane (meth)acrylate having a molecular weight equal to or greater than a specific molecular weight and a methacrylic acid in a specific amount, thereby providing a cured body that exhibits high elongation at low and high temperatures and has a high modulus of elasticity even at high temperatures. However, problems exist in that the necessity of adding a large amount of a urethane (meth)acrylate makes kneading difficult in practical production, and in addition, the resulting adhesive composition is highly viscous and, therefore, difficult to handle. Furthermore, Patent Literature 5 is silent about high-temperature adhesion properties, durability, and the like.

Patent Literature 6 discloses a technique related to a urethane curable waterproof material having excellent low-temperature properties. The technique uses, as a raw material, a modified polytetramethylene glycol that is liquid at ambient temperatures. However, Patent Literature 6 is silent about introducing a (meth)acrylate group, which is a reactive functional group, to the urethane backbone to use the resulting urethane (meth)acrylate.

Patent Literature 7 discloses a technique related to a UV curable coating material in which a urethane diacrylate oligomer made from a modified tetramethylene glycol is used. However, Patent Literature 7 is silent about adhesion, heat resistance, cured product elongation, and the like.

One property that has been required in adhesives in recent years is cured product elongation. In instances where materials having different coefficients of linear expansion are bonded to each other, if the cured product elongation is low, stress generated between the different types of substrates cannot be absorbed, and, consequently, durability deteriorates, which may cause problems, such as delamination of a bonding surface (Patent Literature 8).

### Citation List

### Patent Literature

PTL 1: Japanese Unexamined Patent Application Publication No. 9-241585
PTL 2: Japanese Unexamined Patent Application Publication No. 2019-89889
PTL 3: Japanese Unexamined Patent Application Publication No. 2018-172565
PTL 4: Japanese Unexamined Patent Application Publication No. 2000-355647
PTL 5: International Publication No. 2020/100832
PTL 6: Japanese Unexamined Patent Application Publication No. 7-268050
PTL 7: Japanese Unexamined Patent Application Publication (Translation of PCT Application) No. 2007-505198
PTL 8: Japanese Unexamined Patent Application Publication No. 2015-182248

### Summary of Invention

### Technical Problem

The requirements on the heat resistance properties of adhesives and joined members formed with an adhesive are becoming stricter every year. The above-described methods are problematic in that they cannot provide sufficient high-temperature adhesive strength. Furthermore, although the addition of a liquid rubber having a polymerizable unsaturated double bond at an end has been employed to solve various problems, such liquid rubbers are expensive and, in addition, increase a viscosity of adhesives. Accordingly, there is a need for a material that can produce effects with as little addition of the material as possible.

An object of the present invention is to provide a two-part acrylic adhesive having excellent high-temperature adhesive strength and excellent cured product elongation. Solution to Problem

To achieve the object, the present inventors diligently conducted studies and discovered that the problems described above can be solved by using, in an acrylic adhesive, a urethane (meth)acrylate having a backbone including a polytetramethylene glycol that has reduced crystallinity. Accordingly, the present invention was completed.

Specifically, a two-part acrylic adhesive composition of the present invention relates to the following invention.

(1) A two-part acrylic adhesive composition including, as essential components, (A) a urethane (meth)acrylate having a backbone including a low-crystallinity polytetramethylene glycol, (B) a polymerizable vinyl monomer, (C) an organic peroxide, and (D) a reducing agent.
(2) The two-part acrylic adhesive composition according to (1), wherein the component (A) is present in an amount of 5 to 60 parts by weight, the component (B) is present in an amount of 40 to 90 parts by weight, the component (C) is present in an amount of 0.05 to 10 parts by weight, and the component (D) is present in an amount of 0.01 to 10 parts by weight, per 100 parts by weight of a total weight of the component (A) and the component (B).
(3) The two-part acrylic adhesive composition according to (1) or (2), wherein the polymerizable vinyl monomer that serves as the component (B) includes acryloylmorpholine.
(4) The two-part acrylic adhesive composition according to (1) or (2), wherein the polymerizable vinyl monomer that serves as the component (B) includes a methacrylic acid.
(5) The two-part acrylic adhesive composition according to (1) or (2), wherein the polymerizable vinyl monomer that serves as the component (B) includes a (meth)acrylic acid ester containing a phosphoric acid ester group.
(6) A cured product of the two-part acrylic adhesive composition according to any one of (1) to (5). (7) An article including the cured product of the two-part acrylic adhesive composition according to (6), the cured product being a constituent element of the article.

### Advantageous Effects of Invention

With the present invention, an acrylic adhesive having excellent high-temperature adhesive strength and excellent cured product elongation is provided.

### Description of Embodiments

In the present invention, a two-part acrylic adhesive composition is provided to achieve the object. The two-part acrylic adhesive composition includes, as essential components, (A) a urethane (meth)acrylate having a backbone including a low-crystallinity polytetramethylene glycol, (B) a polymerizable vinyl monomer, (C) an organic peroxide, and (D) a reducing agent.

### ((A) Urethane (Meth)acrylate Having Backbone Including Low-Crystallinity Polytetramethylene Glycol)

In the present invention, the "urethane (meth)acrylate" is a polymer or an oligomer each having at least two urethane linkages in the molecule and having a (meth)acrylate group in a side chain of the molecule or at an end of the molecule. Methods for making such a urethane (meth)acrylate include a method in which a diol compound having a hydroxy group at an end is reacted with a polyvalent isocyanate compound to form a prepolymer, and the prepolymer is then reacted with, for example, a hydroxylalkyl (meth)acrylate to form a urethane (meth)acrylate; and a method in which the same diol compound is reacted with, for example, a compound having an isocyanate group and a (meth)acrylic in one molecule. These are known methods, and the compounds used are known compounds, which are widely known.

The (meth)acrylate group is, specifically, a functional group having a polymerizable double bond selected from acrylate groups, methacrylate groups, acrylamide groups, and methacrylamide groups. One of these (meth)acrylate groups may be used alone, or two or more of these may be used. Among these, acrylate groups have excellent availability and reactivity, and methacrylate groups have excellent mechanical properties of a resulting cured product. Acrylamide groups and methacrylamide groups are characterized by excellent curability.

A feature of the present invention is that the diol component used is a low-crystallinity polytetramethylene glycol.

Examples of low-crystallinity polytetramethylene glycols that may be used include modified polytetramethylene glycols derived from copolymerization of a tetrahydrofuran with an alkyl-substituted tetrahydrofuran (e.g., 3-methyltetrahydrofuran), modified polytetramethylene glycols derived from copolymerization of a neopentyl glycol with a tetrahydrofuran, and modified polytetramethylene glycols derived from copolymerization of a propylene glycol or an ethylene glycol with a tetrahydrofuran. One of these diol components may be used alone, or two or more of these having different molecular weights and different degrees of modification may be used in combination. It is also possible to use a different diol component, in combination with the low-crystallinity polytetramethylene glycol, to synthesize the urethane (meth)acrylate.

Examples of the low-crystallinity polytetramethylene glycol include, but are not limited to, PTGL 1000, PTGL 2000, PTGL 3000, and PTGL 3500, manufactured by Hodogaya Chemical Co., Ltd.; a PTXG series, manufactured by Asahi Kasei Corp.; and a Polycerin series (e.g., DCB-1000, DCB-2000, DC-1100, DC-3000E, and DC-1800E), manufactured by NOF Corporation.

A polytetramethylene glycol that is not of a low-crystallinity type is a homopolyol derived from ring opening polymerization of a tetrahydrofuran. Typically, the polytetramethylene glycol has a melting point within a range of 20 to 40°C and, therefore, undergoes crystallization at a temperature in or near an ambient temperature range. Accordingly, at high temperatures greater than an ambient temperature, urethane (meth)acrylates in which such a common polytetramethylene glycol is used experience crystal melting and, therefore, exhibit low viscosity, and, at low temperatures, the urethane (meth)acrylates exhibit extremely high viscosity. In contrast, in low-crystallinity PTMGs, the crystallinity unique to polytetramethylene glycols is reduced, and, therefore, low-crystallinity PTMGs have a feature of having a small difference between low and high temperature viscosities.

The urethane (meth)acrylate having a backbone including a low-crystallinity PTMG, which is used as the component (A), is to be selected in view of the feature. Accordingly, the urethane (meth)acrylate is one in which a viscosity ratio, which is a ratio between low and high temperature viscosities as measured, is low. Specifically, the viscosity ratio between viscosities at 15°C and 40°C of a urethane acrylate including a pure PTMG, which is crystalline, is approximately 40:1; accordingly, any urethane (meth)acrylate in which the viscosity ratio is less than the mentioned ratio may be sufficient. The viscosity ratio is preferably less than or equal to 30:1, more preferably less than or equal to 20:1, and even more preferably less than or equal to 10:1. When the viscosity ratio is less than or equal to 10:1, the urethane (meth)acrylate can be handled as an amorphous polymer.

Although the urethane (meth)acrylate having a backbone including a low-crystallinity PTMG has reduced crystallinity, the urethane (meth)acrylate may undergo gradual crystal formation if stored over a long period of time, and as a result, the urethane (meth)acrylate as a whole may solidify and lose fluidity. Even in such a case, heating the urethane (meth)acrylate to approximately 60°C can easily cause the crystals to disappear, which makes the measurement of the viscosity possible.

Preferably, the urethane (meth)acrylate used as the component (A) has a weight average molecular weight of 500 to 50,000. The weight average molecular weight is more preferably 1,000 to 40,000 and even more preferably 3,000 to 35,000. If the weight average molecular weight is less than 500, a resulting cured adhesive product has insufficient elongation and, consequently, may have poor durability. If the weight average molecular weight is greater than 50,000, a resulting curable composition is highly viscous, which makes handling difficult.

Specific examples of the component (A) used in the present invention include, but are not limited to, Art Resins UN-6303, UN-6304, UN-6305, UN-6306, and KY-402Z, manufactured by Negami Chemical Industrial Co., Ltd.

A content of the component (A) is not limited and is preferably 5 to 60 parts by weight and more preferably 10 to 40 parts by weight, per 100 parts by weight of the total weight of the component (A) and the component (B), which is a polymerizable vinyl monomer. If the content is less than 5 parts by weight, a resulting cured adhesive product has insufficient elongation and, consequently, may have poor durability. If the content is greater than 60 parts by weight, a resulting curable composition is highly viscous, which makes handling difficult. When the content is less than or equal to 40 parts by weight, heat resistance is further improved.

### ((B) Polymerizable Vinyl Monomer)

The polymerizable vinyl monomer (B) is a vinyl monomer different from the component (A) and may be any of a variety of polymerizable vinyl monomers. Specifically, any of a variety of polymerizable vinyl monomers that are radically polymerizable may be used. Examples of the polymerizable vinyl monomers include (meth)acrylic acid esters, styrenes, α-alkylstyrenes, divinylbenzenes, vinyl ethers, divinyl ethers, maleic anhydrides, maleic acid esters, maleimide compounds, N-vinylpyrrolidones, 2-vinylpyridine, vinyl acetate, and vinyl propionate.

Among these, (meth)acrylic acid esters are preferable from the standpoint of good reactivity.

Examples of the (meth)acrylic acid esters include the compounds listed in (i) to (vi) below.

### (i) Monomers Represented by General Formula Z-O-R¹

In the formula of (i), Z represents a (meth)acryloyl group, and R¹ represents hydrogen, an alkyl group having 1 to 20 carbon atoms, a cycloalkyl group, a benzyl group, a phenyl group, a tetrahydrofurfuryl group, a glycidyl group, a dicyclopentanyl group, a dicyclopentenyl group, a (meth)acryloyl group, or an isobornyl group.

Examples of monomers represented by the general formula of (i) include methyl (meth)acrylate, cyclohexyl (meth)acrylate, benzyl (meth)acrylate, tetrahydrofurfuryl (meth)acrylate, dicyclopentanyl (meth)acrylate, dicyclopentenyl (meth)acrylate, glycerol (meth)acrylate, glycerol di(meth)acrylate, glycerol formal (meth)acrylate, isobornyl (meth)acrylate, methyl (meth)acrylate-2-allyloxy, and (meth)acrylic acids.

### (ii) Monomers Represented by General Formula Z-O-(R²O)ₚ-R¹

In the formula of (ii), Z and R¹ are the same as those described above. R² represents -C₂H₄-, -C₃H₆-, -CH₂CH(CH₃)-, - C₄H₈-, or -C₆H₁₂-, and p represents an integer of 1 to 25.

Examples of monomers represented by the general formula of (ii) include 2-hydroxyethyl (meth)acrylate, 2-hydroxypropyl (meth)acrylate, ethoxyethyl (meth)acrylate, polyethylene glycol (meth)acrylate, phenoxy ethyl (meth)acrylate, dicyclopentenyloxyethyl (meth)acrylate, phenoxydiethylene glycol (meth)acrylate, tripropylene glycol di(meth)acrylate, and 1,6-hexanediol di(meth)acrylate.

### (iii) Monomers Represented by General Formula Z-(OR²)q-O-Ph-C(R³)₂-Ph-O-(R²O)q-Z

In the formula of (iii), Z and R² are the same as those described above. R³ represents hydrogen or an alkyl group having 1 to 4 carbon atoms, q represents an integer of 0 to 8, and Ph represents a phenylene group.

Examples of monomers represented by the general formula of (iii) include EO-modified epoxy (meth)acrylates, such as 2,2-bis((4-(meth)acryloxy)phenyl)propane, 2,2-bis((4-(meth)acryloxy)ethoxyphenyl)propane, 2,2-bis((4-(meth)acryloxy)diethoxyphenyl)propane, 2,2-bis((4-(meth)acryloxy)propoxyphenyl)propane, and 2,2-bis((4-(meth)acryloxy)polyethoxyphenyl)propane.

### (iv) Acrylamide Monomers

Examples of acrylamide monomers include (meth)acrylamides, dimethyl (meth)acrylamides, diethyl (meth)acrylamides, isopropyl (meth)acrylamides, dimethylaminopropyl (meth)acrylamides, hydroxyethyl (meth)acrylamides, diacetone (meth)acrylamides, and acryloylmorpholines.

### (v) Multifunctional Acrylates Other Than Monomers Represented by General Formula of (i), General Formula of (ii), General Formula of (iii), or General Formula of (iv)

Examples of multifunctional acrylates classified into (v) include 1,3-butylene glycol di(meth)acrylate, 1,4-butylene glycol di(meth)acrylate, neopentyl glycol di(meth)acrylate, 1,6-hexane glycol di(meth)acrylate, ethylene glycol di(meth)acrylates, polyethylene glycol di(meth)acrylates, propylene glycol di(meth)acrylates, tripropylene glycol di(meth)acrylates, neopentyl glycol di(meth)acrylates, ethylene oxide-modified neopentyl glycol di(meth)acrylates, propylene oxide-modified neopentyl glycol di(meth)acrylates, bisphenol A di(meth)acrylates, ethylene oxide-modified bisphenol A di(meth)acrylates, epichlorohydrin-modified bisphenol A di(meth)acrylates, ethylene oxide-modified bisphenol S di(meth)acrylates, hydroxypivalic acid ester neopentylglycol diacrylates, caprolactone-modified hydroxypivalic acid ester neopentylglycol diacrylates, neopentyl glycol-modified trimethylolpropane di(meth)acrylates, stearic acid-modified pentaerythritol di(meth)acrylates, dicyclopentenyl diacrylates, ethylene oxide-modified dicyclopentenyl di(meth)acrylates, di(meth)acryloyl isocyanurates, trimethylolpropane tri(meth)acrylates, pentaerythritol tri(meth)acrylates, ditrimethylolpropane tetra(meth)acrylates, pentaerythritol tetra(meth)acrylates, dipentaerythritol hexa(meth)acrylates, and dipentaerythritol monohydroxypenta(meth)acrylates.

### (vi) Oligomers Having (Meth)acrylate Group

Examples of oligomers classified into (vi) include poly(meth)acrylic acid ester oligomers, polyester (meth)acrylate-based oligomers, urethane (meth)acrylate-based oligomers, epoxy (meth)acrylate-based oligomers, polycarbonate-based oligomers, epoxy-based oligomers, saturated hydrocarbon-based oligomers, and unsaturated hydrocarbon-based oligomers that have a (meth)acrylate group. Specific examples of these oligomers include those described in paragraphs 0029 to 0039 of Japanese Unexamined Patent Application Publication No. 2018-188602.

These polymerizable vinyl monomers that can serve as the component (B) may be used alone or in a combination of two or more.

The (meth)acrylic acid ester may be a (meth)acrylic acid ester having a cycloaliphatic alkyl group. This is preferable because, in this case, a high Tg of a cured adhesive product is achieved, which leads to excellent adhesive strength. Dicyclopentanyl (meth)acrylate, dicyclopentenyl (meth)acrylate, and isobornyl (meth)acrylate are preferable from the standpoint of availability.

The content of a (meth)acrylic acid cycloaliphatic alkyl ester is not particularly limited and is preferably 0 to 50 parts by weight and more preferably 10 to 40 parts by weight, per 100 parts by weight of the total weight of the component (A) and the component (B). If the content of the (meth)acrylic acid cycloaliphatic alkyl ester is greater than 50 parts by weight, the adhesive tends to have reduced elongation and may have reduced adhesion.

Furthermore, the polymerizable vinyl monomer may include a methacrylic acid; this is preferable because, in this case, a high Tg of a cured adhesive product is achieved, which leads to excellent adhesive strength, and in addition, heat resistance is improved.

The content of the methacrylic acid is preferably 0.1 to 30 parts by weight and more preferably 5 to 20 parts by weight, per 100 parts by weight of the total weight of the component (A) and the component (B). If the content of the methacrylic acid is greater than 30 parts by weight, the cured product elongation may be reduced.

Furthermore, the polymerizable vinyl monomer may include acryloylmorpholine; this is preferable because, in this case, a high Tg of a cured adhesive product is achieved, which leads to excellent adhesive strength, and in addition, the elongation is improved.

The content of the acryloylmorpholine is preferably 1 to 50 parts by weight and more preferably 5 to 25 parts by weight, per 100 parts by weight of the total weight of the component (A) and the component (B). If the content of the acryloylmorpholine is greater than 50 parts by weight, a cured product may be brittle, and, therefore, the adhesive strength may be low.

A (meth)acrylic acid ester containing a phosphoric acid ester group may be included. This is preferable because, in this case, excellent adhesion to a metal substrate and excellent adhesive strength are achieved. Specific examples thereof include 2-methacryloyloxyethyl acid phosphate, 2-methacryloyloxypropyl acid phosphate, and bis(2-methacryloyl oxyethyl acid) phosphate.

The content of the (meth)acrylic acid ester containing a phosphoric acid ester group is preferably 0.1 to 10 parts by weight and more preferably 0.3 to 5 parts by weight, per 100 parts by weight of the total weight of the component (A) and the component (B). If the content of the (meth)acrylic acid ester containing a phosphoric acid ester group is less than 0.1 parts by weight, the adhesion to a metal substrate may not be sufficiently improved. If the content is greater than 10 parts by weight, an economic disadvantage is caused, and in addition, the adhesive composition may have reduced storage stability.

### ((C) Organic Peroxide)

The organic peroxide (C) may be any of a variety of organic peroxides. Examples of the organic peroxide include t-butyl peroxybenzoate, cumene hydroperoxide, p-menthane hydroperoxide, t-butyl hydroperoxide, diisopropylbenzene dihydroperoxide, methyl ethyl ketone peroxide, and benzoyl peroxide.

These organic peroxides may be used alone or in a combination of two or more. Among these, hydroperoxides are preferable because hydroperoxides are stable in ambient temperature environments, are easy to handle, and readily begin to react in ambient temperature environments when used in combination with a reducing agent. In particular, it is preferable to use cumene hydroperoxide.

The content of the organic peroxide is preferably 0.05 to 10 parts by weight and more preferably 0.1 to 5 parts by weight, per 100 parts by weight of the total weight of the component (A) and the component (B). If the content of the organic peroxide is less than 0.05 parts by weight, a cure rate may be reduced. If the content is greater than 10 parts by weight, the composition may have poor storage stability.

### ((D) Reducing Agent)

The reducing agent (D) may be any of a variety of compounds that produce radicals when an organic peroxide reacts with the reducing agent. Examples of the reducing agent include reaction condensates of an amine and an aldehyde, triethylamine, tripropylamine, tributylamine, N,N-dimethyl-p-toluidine, 2-mercaptobenzimidazole, methylthiourea, dibutylthiourea, tetramethylthiourea, ethylene thiourea, cobalt naphthenate, copper naphthenate, and vanadium compounds.

Examples of the vanadium compounds include vanadyl acetylacetonate, vanadyl stearate, vanadium naphthenate, vanadium acetylacetonate, and vanadium benzoyl acetonate. Among these, vanadyl acetylacetonate and ethylene thiourea are preferable because of their good reactivity with hydroperoxides.

These reducing agents may be used alone or in a combination of two or more. The content of the reducing agent is preferably 0.01 to 10 parts by weight and more preferably 0.04 to 5 parts by weight, per 100 parts by weight of the total weight of the component (A) and the component (B). If the content of the reducing agent is less than 0.01 parts by weight, the cure rate may be reduced. If the content is greater than 10 parts by weight, the storage stability may be reduced when the reducing agent coexists with the polymerizable vinyl monomer.

### (Other Additives)

If necessary, the two-part acrylic adhesive of the present invention may include one or more additives to the extent that properties such as curability and cured product adhesion are not impaired. Examples of the additives include elastomers, which impart, to cured products, toughness or flexibility, rubber microparticles, adhesion additives, inhibitors, fillers, tackifying resins, extenders, physical property adjustors, reinforcing agents, coloring agents, flame retardants, anti-sagging agents, thixotropic agents, suspending agents, antioxidants, anti-aging agents, UV absorbers, perfumes, pigments, and dyes.

Other examples include paraffins for improving the curability of an air contact surface; beeswaxes; various reaction accelerators and cure regulating agents for regulating the cure rate; and storage stabilizers.

### (Elastomers)

Examples of the elastomers include, but are not limited to, various synthetic rubbers, such as acrylonitrile-butadiene-methacrylic acid copolymers, acrylonitrile-butadiene methyl methacrylate copolymers, methyl methacrylate-butadiene-styrene copolymers (MBS resins), acrylonitrile-styrene-butadiene copolymers, acrylonitrile-butadiene rubbers, urethane rubbers, styrene-butadiene rubbers, chloroprene rubbers, polyisoprene rubbers, nitrile rubbers, acrylic rubbers, epichlorohydrin rubbers, and butadiene rubbers, natural rubbers, liquid rubbers, such as liquid polybutadiene, acrylic-terminated liquid polybutadiene, and liquid acrylonitrile-butadiene copolymers, styrenic thermoplastic elastomers, such as styrene-polybutadiene-styrene synthetic rubbers, olefinic thermoplastic elastomers, such as polyethylene-EPDM synthetic rubbers, urethane-based thermoplastic elastomers, such as caprolactone-type thermoplastic polyurethane, adipate-type thermoplastic polyurethane, and PTMG-type thermoplastic polyurethane, polyester-based thermoplastic elastomers, such as polybutylene terephthalate-polytetramethylene glycol multiblock polymers, polyamide-based thermoplastic elastomers, such as nylon-polyol block copolymers and nylon-polyester block copolymers, 1,2-polybutadiene-based thermoplastic elastomers, and vinyl chloride-based thermoplastic elastomers. These elastomers may be used alone or in a combination of two or more to the extent that separation is not observed.

### (Rubber Microparticles)

Rubber microparticles serve to adjust the viscosity of the adhesive composition and impart thixotropic properties thereto and, in addition, serve as an impact modifier for the cured adhesive layer. The rubber microparticles may be single-layer microparticles formed of at least a rubber layer or may be core-shell microparticles including a core layer, which is formed of a rubber, and a shell layer, which is a resin layer covering an outside of the core layer. The core-shell rubber microparticles can be synthesized as polymer microparticles in which a shell layer is formed by graft-polymerizing a graft-polymerizable monomer component in the presence of a core layer. Examples of the rubber of the core layer include, but are not limited to, silicone rubbers, butadiene rubbers, styrene-butadiene rubbers, and acrylic rubbers. The shell layer is typically formed with a (meth)acrylate monomer, an aromatic vinyl monomer, an acrylonitrile, or the like or may be formed with a monomer other than the foregoing monomers. Regarding the type of rubber of the core layer and the monomer of the shell layer, one type of rubber and monomer may be used, or two or more rubbers and monomers may be used, depending on the desired properties.

### (Thixotropic Agent)

A thixotropic agent may be added to impart thixotropy. Examples of the thixotropic agent include micronized polyethylene, dibenzylidene-D-sorbitol, cellulose triacetate, stearic acid amides, bentonites, and micronized silica.

### (Storage Stabilizer)

Examples of the storage stabilizers include various antioxidants, which include polymerization inhibitors. Examples of the antioxidants include p-methoxyphenol, hydroquinone, benzoquinone, 2,6-di-tert-butyl-p-cresol, 2,2'-methylenebis(4-methyl-6-tert-butylphenol), triphenyl phosphite, phenothiazine, and N-isopropyl-N'-phenyl-p-phenylenediamine. Among these, hydroquinone and benzoquinone are preferable.

### (Epoxy Resin)

The two-part acrylic adhesive of the present invention may further include an epoxy resin. Adding an epoxy resin to the composition makes it possible, for example, to adjust a hardness of the composition with a cross-linked structure; to improve adhesion to metal with the hydroxy group that is generated by the ring opening of the epoxy group; to improve cohesion of the polymer; and to reduce the viscosity by serving as a diluent.

Examples of the epoxy resin include bisphenol A-type or bisphenol F-type glycidyl ethers, cycloaliphatic epoxy compounds, such as 3,4-epoxycyclohexylmethyl 3',4'-epoxycyclohexanecarboxylate and 3,4-epoxy-6-methylcyclohexylmethyl 3,4-epoxycyclohexanecarboxylate, and combinations thereof.

### (Adhesive Composition)

The present adhesive composition provides a cured product of the adhesive by undergoing a polymerization reaction, which is caused by mixing two parts together and using the action of the organic peroxide and the reducing agent. Accordingly, a makeup of the adhesive and usage of the adhesive may be ones similar to those of common two-part acrylic adhesives.

A joined body of the present invention can be obtained with a bonding method, which may be, for example, a bonding method in which a mixture of a first part and a second part is applied to adherends or a bonding method in which a first part and a second part are separately applied to respective adherends and subsequently mixed with each other by the bonding of the adherends to each other. Furthermore, it is possible to use a static mixer having a structure in which the two parts can be mixed together at an end or to use a mechanical mixing device. These methods are non-limiting.

### [Effects of Embodiments]

The two-part acrylic adhesive of the present invention, in which a specific urethane acrylate is used, cures rapidly at an ambient temperature (room temperature) under the action of the organic peroxide and the reducing agent. Adjustments can be made in consideration of the reactivity of each of the components, to increase the cure rate or, conversely, slow the cure rate to extend the pot life. In addition, curability at high and low temperatures can be appropriately adjusted.

Joined bodies that are produced have excellent heat resistance, and the adhesive has excellent elongation even at low temperatures. The adhesive has excellent adhesion to various metals and resins. In particular, the adhesive has excellent adhesion to metals, such as iron and aluminum, wood, concrete, and composite plastics, such as CFRP, GFRP, and FRP. The adhesive also has excellent adhesion to oil surfaces. Furthermore, the adhesive has excellent durability. Examples of the durability include heat aging resistance, heat and humidity aging resistance, and hot water aging resistance. Furthermore, since the adhesive has good cured product elongation, a joined boy is expected to have a ductile fracture rather than a brittle fracture when the joined body is broken. The adhesive also has good impact resistance and is, therefore, highly reliable. The two-part acrylic adhesive of the present invention has good storage stability, an excellent ability to be dispensed from a container, excellent mixing properties, and excellent workability. When the two parts are mixed together, a difference in a weight ratio does not have a significant influence, which means that operation management is facilitated. Note that the acrylic adhesive of the present invention can be used in a variety of fields, such as various electrical and electronic fields, automobiles, machines, buildings, and civil engineering. Furthermore, various articles are provided in which a cured product of the two-part acrylic adhesive composition of the present invention is a constituent element.

### EXAMPLES

More detailed descriptions will be given below with reference to Examples. As will be appreciated, the Examples are illustrative and not to be construed as restrictive. Herein, "%" means "weight %", and "parts" means "parts by weight" unless otherwise specified.

### <Measurement Method>

### (Measurement of Molecular Weight)

The weight average molecular weight (Mw) was determined as a polystyrene equivalent molecular weight measured by gel permeation chromatography. The pumping system used was an HLC-8320GPC, manufactured by Tosoh Corporation. The columns used were TSK-GEL SuperH-type columns, manufactured by Tosoh Corporation. The solvent used was THF.

### (Measurement of Viscosity)

A measurement was performed with a parallel-plate rotational viscometer manufactured by Brookfield Engineering. The measurement temperatures were 15°C and 40°C. The plates used had a diameter of 20 mm and a gap distance of 0.175 mm. The rotational speed was 20 (1/s), except that the rotational speed in the case of high viscosities of 1000 Pa·s or greater was 2 (1/s).

### (Adhesive Strength (ambient temperature))

A specimen was prepared as follows. Two SPCC steel sheets (25 mm (width) × 100 mm (length) × 1.6 mm (thickness)) surface-treated with acetone were provided. A two-part acrylic adhesive was uniformly applied to an area of 25 mm × 12.5 mm of one of the SPCC steel sheets, and the SPCC steel sheet was bonded to the other SPCC steel sheet. The thickness of the adhesive layer was adjusted to be 0.25 mm.

Subsequently, the specimen was cured in an environment at 23°C and 50% RH for a day or longer. Thereafter, a tensile shear adhesive strength was measured in accordance with JIS K 6850 at a crosshead speed of 50 mm/min at 23°C.

### (Adhesive Strength (hot temperatures))

The adhesive strength of a specimen prepared in the same manner was measured in environments at 80°C and 120°C in the same manner as that described above.

### (Dumbbell Tensile Physical Properties)

A specimen was prepared as follows. The two-part acrylic adhesive was poured into a No. 3 dumbbell-shaped mold made of EPDM and having a thickness of 1 mm and was cured in an environment at 23°C and 50% RH for two days or longer. A tensile test was conducted in accordance with JIS K 6251 at a crosshead speed of 100 mm/min, to measure an elongation at break and a maximum tensile strength.

The compounds listed in the tables are as follows.
UN-6303 (Art Resin UN-6303, a low-crystallinity PTMG-based urethane acrylate manufactured by Negami Chemical Industrial Co., Ltd., Mw=4,600)
UN-6304 (Art Resin UN-6304, a low-crystallinity PTMG-based urethane acrylate manufactured by Negami Chemical Industrial Co., Ltd., Mw=13,000)
UN-6305 (Art Resin UN-6305, a low-crystallinity PTMG-based urethane acrylate manufactured by Negami Chemical Industrial Co., Ltd., Mw=28,000)
KY-402Z (Art Resin KY-402Z, a low-crystallinity PTMG-based urethane acrylate manufactured by Negami Chemical Industrial Co., Ltd., Mw=33,000)
UV-3700B (Shikoh UV-3700B, a polypropylene glycol (PPG)-based urethane acrylate manufactured by Mitsubishi Chemical Corporation, Mw=38,000)
UV-6640B (Shikoh UV-6640B, a PTMG-based urethane acrylate manufactured by Mitsubishi Chemical Corporation, Mw=5,000)
UN-7600 (Art Resin UN-7600, a polyester-based urethane acrylate manufactured by Negami Chemical Industrial Co., Ltd., Mw=12,000)
Acryloylmorpholine (ACMO, manufactured by KJ Chemicals Corporation)
Isobornyl methacrylate (Light Ester IB-X, manufactured by Kyoeisha Chemical Co., Ltd.)
Methacrylic acid (methacrylic acid manufactured by Mitsubishi Chemical Corporation)
Methyl methacrylate (MMA manufactured by Mitsubishi Chemical Corporation)
Glycerol formal methacrylate (Visiomer Glyfoma, manufactured by Evonik Industries AG)
2-Hydroxypropyl methacrylate (Light Ester HOP, manufactured by Kyoeisha Chemical Co., Ltd.)
Ethylhexyl methacrylate (Light Ester EH, manufactured by Kyoeisha Chemical Co., Ltd.)
Light Ester P-1M (2-methacryloyloxyethyl acid phosphate, manufactured by Kyoeisha Chemical Co., Ltd.)
CHP (Percumyl H80, cumene hydroperoxide manufactured by NOF Corporation)
Kane Ace M521 (MBS resin core-shell polymer manufactured by Kaneka Corporation)
SP0145 (powdered paraffin wax manufactured by Nippon Seiro Co., Ltd.)
Paraffin wax 115 (solid wax manufactured by Nippon Seiro Co., Ltd.)
EDTA (Chelest 400, sodium ethylenediaminetetraacetate tetrahydrate manufactured by Chelest Corporation)
Talc DNB (talc manufactured by Nippon Talc Co., Ltd.)
jER 828 (bisphenol A-type epoxy resin manufactured by Mitsubishi Chemical Corporation)
Nacem Vanadyl (vanadyl acetylacetonate complex manufactured by Nihon Kagaku Sangyo Co., Ltd.)
Malic acid (reagent manufactured by Tokyo Chemical Industry Co., Ltd.)
Benzoquinone (reagent manufactured by Tokyo Chemical Industry Co., Ltd.)
Hydroquinone (reagent manufactured by Tokyo Chemical Industry Co., Ltd.)
AO-60 (antioxidant manufactured by Adeka Corporation)

### (Reference Example)

The viscosity of the urethane (meth)acrylates to be used in Examples and Comparative Examples was measured at 15°C and 40°C. The viscosity ratio is shown in Table 1.

**[Table 1]**

| | Product Name | Crystallinity | 15°C Viscosity (Pa·s) | 40°C Viscosity (Pa·s) | 15°C/40°C Viscosity Ratio |
|---|---|---|---|---|---|
| Low-crystallinity PTMG-based urethane acrylate | UN-6303 | Low-crystallinity | 2176 | 81 | 27 |
| Low-crystallinity PTMG-based urethane acrylate | UN-6304 | Low-crystallinity | 586 | 70 | 8 |
| Low-crystallinity PTMG-based urethane acrylate | UN-6305 | Low-crystallinity | 4305 | 662 | 7 |
| Low-crystallinity PTMG-based urethane acrylate | KY-402Z | Low-crystallinity | 2323 | 418 | 6 |
| PTMG-based urethane acrylate | UV-6640B | Crystalline | 5216 | 122 | 43 |
| PPG-based urethane acrylate | UV-3700B | Amorphous | 1349 | 165 | 8 |

As is apparent from Table 1, the crystalline PTMG-based urethane acrylate had a viscosity ratio of 43:1, whereas the low-crystallinity PTMG-based urethane acrylate had a viscosity ratio within a range of 6:1 to 27:1. This is attributable to differences in the degree of crystallinity and differences in the molecular weight between the low-crystallinity PTMGs used in the respective urethane acrylates. In any case, their viscosity ratios were lower than that of the crystalline PTMG-based urethane acrylate, and, therefore, it is apparent that their crystallinities were low.

### (Examples 1 to 3 and Comparative Examples 1 to 3)

The ingredients were each added in the proportion shown in Table 2 and then mixed together with stirring to prepare a part A and a part B of a two-part acrylic adhesive. The part A and the part B were weighed according to a ratio of part A:part B = 100:5. After the mixing, the mixture was used as the adhesive.

**[Table 2]**

| | Component | Ingredient | | Example | | | Comparative Example | | |
|---|---|---|---|---|---|---|---|---|---|
| | | | | 1 | 2 | 3 | 1 | 2 | 3 |
| Part A | (A) | Low-crystallinity PTMG-based urethane acrylate (KY-420Z) | | 30 | | | | | |
| | | Low-crystallinity PTMG-based urethane acrylate (UN-6304) | | | 30 | | | | |
| | | Low-crystallinity PTMG-based urethane acrylate (UN-6305) | | | | 30 | | | |
| | | PTMG-based urethane acrylate (UV-6640B) | | | | | 30 | | |
| | | Polyester-based urethane acrylate (UN-7600) | | | | | | 30 | |
| | | PPG-based urethane acrylate (UV-3700B) | | | | | | | 30 |
| | (B) | Acryloylmorpholine | | 15 | 15 | 15 | 15 | 15 | 15 |
| | | Isobornyl methacrylate | | 30 | 30 | 30 | 30 | 30 | 30 |
| | | Methacrylic acid | | 13 | 13 | 13 | 13 | 13 | 13 |
| | | Light Ester P-1M | | 2 | 2 | 2 | 2 | 2 | 2 |
| | (C) | CHP | | 0.4 | 0.4 | 0.4 | 0.4 | 0.4 | 0.4 |
| | Additive | Kane Ace M521 | | 8 | 8 | 8 | 8 | 8 | 8 |
| Part B | (B) | Acryloylmorpholine | | 100 | 100 | 100 | 100 | 100 | 100 |
| | (D) | Nacem Vanadyl | | 1 | 1 | 1 | 1 | 1 | 1 |
| Tensile Shear Adhesive Strength (MPa) | | | 23°C | 26 | 28 | 28 | 24 | 21 | 21 |
| | | | 80°C | 20 | 22 | 23 | 23 | 19 | - |
| | | | 120°C | 16 | 16 | 15 | 17 | 12 | 13 |
| Dumbbell Tensile Strength (MPa) | | | | 13 | 23 | 16 | 43 | 8 | 8 |
| Dumbbell Elongation (%) | | | | 170 | 93 | 217 | 3 | 5 | 142 |

In Table 2, the amount of each of the ingredients is expressed in parts by weight.

The adhesive strength test at an ambient temperature (23°C) and hot temperatures (80°C and 120°C) was conducted on the produced adhesives, and the dumbbell tensile test was conducted on cured products. The results are shown in Table 2.

As is apparent from Examples 1 to 3, in the instance where a two-part acrylic adhesive of the present invention was used, the adhesive strengths at 80°C and 120°C were still greater than or equal to 50% of the adhesive strength at an ambient temperature, which indicated that excellent heat resistance was achieved, and that good cured dumbbell elongation was also achieved, which was a sufficient elongation for the bonded portion to undergo a ductile fracture.

In contrast, in all of Comparative Examples 1 to 3, the dumbbell elongation and/or the maximum tensile strength were poor.

### (Examples 4 to 13)

The ingredients were each added in the proportion shown in Table 3 and then mixed together with stirring to prepare a part A and a part B of a two-part acrylic adhesive. The part A and the part B were weighed according to a ratio of part A:part B = 100:5. After the mixing, the mixture was used as the adhesive.

**[Table 3]**

| | Component | Ingredient | | Example | | | | | | | | | |
|---|---|---|---|---|---|---|---|---|---|---|---|---|---|
| | | | | 4 | 5 | 6 | 7 | 8 | 9 | 10 | 11 | 12 | 13 |
| Part A | (A) | Low-crystallinity PTMG-based urethane acrylate (KY-402Z) | | 20 | 25 | 32 | 30 | 30 | 45 | 30 | 30 | 30 | 35 |
| | | Low-crystallinity PTMG-based urethane acrylate (UN-6303) | | | 20 | | | | | | | | |
| | | Polyester-based urethane acrylate (UV-3700B) | | 25 | | | | | | | | | |
| | (B) | Acryloylmorpholine | | 15 | 15 | 15 | 15 | 15 | 15 | 15 | | | |
| | | Isobornyl methacrylate | | 40 | 40 | 30 | 30 | | 40 | 30 | 30 | 30 | 19 |
| | | Methacrylic acid | | 14 | 15 | 13 | 13 | 13 | 15 | 13 | 13 | 13 | 18 |
| | | Methyl methacrylate | | | | | | 30 | | | 15 | | |
| | | Glycerol formal methacrylate | | | | | | | | | | 15 | |
| | | 2-Hydroxypropyl methacrylate | | | | | | | | | | | 14 |
| | | Ethylhexyl methacrylate | | | | | | | | | | | 14 |
| | | Light Ester P-1M | | 1 | 1 | 1 | 1 | 1 | 1 | 2 | 2 | 2 | 2 |
| | (C) | CHP | | 0.4 | 0.4 | 0.4 | 0.4 | 0.4 | 0.4 | 0.4 | 0.4 | 0.4 | 0.4 |
| | Additive | Kane Ace M521 | | 8 | 8 | 8 | 8 | 8 | 8 | | | | |
| | | SP0145 | | | | | | | 1 | | | | |
| Part B | (B) | Acryloylmorpholine | | 100 | 100 | 100 | 100 | 100 | 100 | 100 | 100 | 100 | 100 |
| | (D) | Nacem Vanadyl | | 1 | 1 | 1 | 1 | 1 | 1 | 1 | 1 | 1 | 1 |
| Tensile Shear Adhesive Strength (MPa) | | | 23°C | 27 | 27 | 30 | 27 | 21 | 21 | 28 | 27 | 17 | 29 |
| | | | 80°C | 18 | 21 | 21 | 18 | 17 | 14 | - | - | - | - |
| | | | 120°C | 16 | 15 | 15 | 15 | 14 | 13 | 20 | 16 | 14 | 14 |
| Dumbbell Tensile Strength (MPa) | | | | 18 | 28 | 24 | 19 | 16 | 24 | 16 | 40 | 42 | 27 |
| Dumbbell Elongation (%) | | | | 257 | 48 | 230 | 160 | 92 | 245 | 168 | 133 | 43 | 248 |

In Table 3, the amount of each of the ingredients is expressed in parts by weight.

In Examples 4 to 13, the adhesive strength test at an ambient temperature (23°C) and hot temperatures (80°C and 120°C) and the dumbbell tensile test were also conducted, with the same conditions as those of Example 1 and the like being used. The results are shown in Table 3.

As is apparent from Examples 4 to 13, in the instance where a two-part acrylic adhesive of the present invention was used, the adhesive strengths at 80°C and 120°C were still sufficiently high as compared with the adhesive strength at an ambient temperature, which indicated that excellent heat resistance was achieved, and that good cured dumbbell elongation was also achieved, which was a sufficient elongation for the bonded portion to undergo a ductile fracture.

A modulus of elasticity of Example 9 was determined to be 395 MPa, and the modulus of elasticity of Example 12 was determined to be 2015 MPa.

### (Example 14 and Comparative Example 4)

The ingredients were each added in the proportion shown in Table 4 and then mixed together with stirring to prepare a part A and a part B of a two-part acrylic adhesive. The part A and the part B were loaded into a two-part cartridge according to a ratio of part A:part B = 1:1. While the part A and the part B were mixed together at an end portion by using a static mixer, the mixture was dispensed and used as the adhesive.

**[Table 4]**

| | | | Example 14 | | Comparative Example 4 | |
|---|---|---|---|---|---|---|
| Component | Ingredient | | Part A | Part B | Part A | Part B |
| (A) | Low-crystallinity PTMG-based urethane acrylate (KY-420Z) | | 45 | 45 | | |
| | PTMG-based urethane acrylate (UV-6640B) | | | | 15 | 15 |
| | Polyester-based urethane acrylate (UV-3700B) | | | | 45 | 45 |
| (B) | Acryloylmorpholine | | 15 | 15 | 15 | 15 |
| | Isobornyl methacrylate | | 40 | 40 | 30 | 30 |
| | Methacrylic acid | | 15 | 15 | 13 | 13 |
| | Light Ester P-1M | | 2 | 2 | 4 | |
| (C) | CHP | | 1 | | 1 | |
| Additive | Kane Ace M521 | | 8 | 8 | 8 | 8 |
| | Paraffin wax 115 | | | | 1 | 1 |
| | SP0145 | | 1 | 1 | | |
| | Talc DNB | | | | 15 | 15 |
| | EDTA | | 0.1 | | 0.1 | |
| | Malic acid | | 0.1 | | 0.1 | |
| | Benzoquinone | | 0.03 | | 0.03 | |
| | Hydroquinone | | | 0.02 | | 0.02 |
| (D) | Nacem Vanadyl | | | 0.35 | | 0.35 |
| Tensile Shear Adhesive Strength (MPa) | | 23°C | 24 | | 20 | |
| | | 80°C | 19 | | 12 | |
| | | 120°C | 13 | | 7 | |
| Dumbbell Tensile Strength (MPa) | | | 28 | | 20 | |
| Dumbbell Elongation (%) | | | 220 | | 83 | |
| Durability | Tensile Shear Adhesive Strength (MPa) | After 85°C/85% High-Temperature High-Humidity Test | 20 | | 15 | |
| | | After 40°C Hot Water Immersion | 21 | | 20 | |
| | | After 100°C Heat Aging Test | 24 | | 20 | |

In Table 4, the amount of each of the ingredients is expressed in parts by weight.

In Example 14 and Comparative Example 4, the adhesive strength test at an ambient temperature (23°C) and hot temperatures (80°C and 120°C) and the dumbbell tensile test were also conducted, with the same conditions as those of Example 1 and the like being used. In addition, the prepared adhesive test specimens were subjected to a high-temperature high-humidity test in an 85°C/85% environment, a 40°C hot water immersion test, and a 100°C heat aging test (test period: two weeks). The results are shown in Table 4.

As is apparent from the results, in the instance where a two-part acrylic adhesive of the present invention was used, the adhesive strength at an ambient temperature and the adhesive strengths at hot temperatures of 80°C and 120°C were higher than those of the Comparative Example, and the elongation and strength in the dumbbell tensile test were excellent. Furthermore, the adhesive strengths after the various durability tests were also higher than those of the Comparative Example.

### (Example 15)

A part A and a part B of a two-part acrylic adhesive were prepared as in Example 7, except that 15 parts by weight of KY-402Z was used as the component (A). The part A and the part B were weighed according to a ratio of part A:part B = 100:5. After the mixing, the mixture was used as the adhesive, and the adhesive strength test at an ambient temperature (23°C) and a hot temperature of 80°C and the dumbbell tensile test were conducted under the same conditions as those of Example 1. The results were as follows. The adhesive strength at an ambient temperature was 23 MPa, the adhesive strength at a hot temperature of 80°C was 18 MPa, the maximum tensile strength was 24 MPa, and the elongation was 32%.

### (Example 16)

A part A and a part B of a two-part acrylic adhesive were prepared as in Example 7, except that 18 parts by weight of the methacrylic acid was used. The part A and the part B were weighed according to a ratio of part A:part B = 100:5. After the mixing, the mixture was used as the adhesive, and the adhesive strength test at an ambient temperature (23°C) and a hot temperature of 80°C and the dumbbell tensile test were conducted under the same conditions as those of Example 1. The results were as follows. The adhesive strength at an ambient temperature was 24 MPa, the adhesive strength at a hot temperature of 80°C was 16 MPa, the maximum tensile strength was 18 MPa, and the elongation was 247%.

### (Example 17)

A part A and a part B of a two-part acrylic adhesive were prepared as in Example 7, except that 6 parts by weight of the methacrylic acid was used. The part A and the part B were weighed according to a ratio of part A:part B = 100:5. After the mixing, the mixture was used as the adhesive, and the adhesive strength test at an ambient temperature (23°C) and a hot temperature of 80°C and the dumbbell tensile test were conducted under the same conditions as those of Example 1. The results were as follows. The adhesive strength at an ambient temperature was 23 MPa, the adhesive strength at a hot temperature of 80°C was 14 MPa, the maximum tensile strength was 24 MPa, and the elongation was 150%.

### (Example 18)

A part A and a part B of a two-part acrylic adhesive were prepared as in Example 5, except that 55 parts by weight of KY-402Z was used as the component (A). The part A and the part B were weighed according to a ratio of part A:part B = 100:5. After the mixing, the mixture was used as the adhesive, and the adhesive strength test at an ambient temperature (23°C) and a hot temperature of 80°C and the dumbbell tensile test were conducted under the same conditions as those of Example 1. The results were as follows. The adhesive strength at an ambient temperature was 25 MPa, the adhesive strength at a hot temperature of 80°C was 16 MPa, the maximum tensile strength was 18 MPa, and the elongation was 207%.

### (Example 19)

A part A and a part B of a two-part acrylic adhesive were prepared as in Example 14, except that for the component (A), 35 parts by weight of KY-402Z was used in both the part A and the part B; for the component (B), 20 parts by weight of the acryloylmorpholine and 30 parts by weight of the isobornyl methacrylate were used in both the part A and the part B; and for the additives, 1 part by weight of Paraffin wax 115 was used instead of 1 part by weight of the powdered paraffin wax (SP0145) in both the part A and the part B, and 0.1 parts by weight of AO-60 and 0.04 parts by weight of the hydroquinone were used in the component (B). The part A and the part B were loaded into a two-part cartridge according to a ratio of part A:part B = 1:1. While the part A and the part B were mixed together at an end portion by using a static mixer, the mixture was dispensed and used as the adhesive. The adhesive strength test at an ambient temperature (23°C) and a hot temperature of 80°C and the dumbbell tensile test were conducted under the same conditions as those of Example 1, except that the tensile shear adhesive strength was measured at a crosshead speed of 2.5 mm/min. The results were as follows. The adhesive strength at an ambient temperature was 26 MPa, the adhesive strength at a hot temperature of 80°C was 21 MPa, the maximum tensile strength was 32 MPa, and the elongation was 33%.

### (Example 20)

A part A and a part B of a two-part acrylic adhesive were prepared as in Example 19, except that for the component (A), 30 parts by weight of UN-6305 was used in both the part A and the part B; and for the component (B), 25 parts by weight of the acryloylmorpholine and 12 parts by weight of Kane Ace M521 were used in both the part A and the part B. The part A and the part B were loaded into a two-part cartridge according to a ratio of part A:part B = 1:1. While the part A and the part B were mixed together at an end portion by using a static mixer, the mixture was dispensed and used as the adhesive. The adhesive strength test at an ambient temperature (23°C) and a hot temperature of 80°C and the dumbbell tensile test were conducted under the same conditions as those of Example 19. The results were as follows. The adhesive strength at an ambient temperature was 25 MPa, the adhesive strength at a hot temperature of 80°C was 20 MPa, the maximum tensile strength was 29 MPa, and the elongation was 113%.

### (Example 21)

A part A and a part B of a two-part acrylic adhesive were prepared as in Example 19, except that for the component (A), 30 parts by weight of UN-6305 was used in both the part A and the part B; and for the component (B), 25 parts by weight of the acryloylmorpholine and 20 parts by weight of the isobornyl methacrylate were used in both the part A and the part B. The part A and the part B were loaded into a two-part cartridge according to a ratio of part A:part B = 1:1. While the part A and the part B were mixed together at an end portion by using a static mixer, the mixture was dispensed and used as the adhesive. The adhesive strength test at an ambient temperature (23°C) and a hot temperature of 80°C and the dumbbell tensile test were conducted under the same conditions as those of Example 19. The results were as follows. The adhesive strength at an ambient temperature was 28 MPa, the adhesive strength at a hot temperature of 80°C was 22 MPa, the maximum tensile strength was 23 MPa, and the elongation was 232%.

### (Example 22)

A part A and a part B of a two-part acrylic adhesive were prepared as in Example 19, except that for the component (A), 30 parts by weight of UN-6305 was used in both the part A and the part B; and for the component (B), 20 parts by weight of the acryloylmorpholine and 11 parts by weight of the methacrylic acid were used in both the part A and the part B. The part A and the part B were loaded into a two-part cartridge according to a ratio of part A:part B = 1:1. While the part A and the part B were mixed together at an end portion by using a static mixer, the mixture was dispensed and used as the adhesive. The adhesive strength test at an ambient temperature (23°C) and a hot temperature of 80°C and the dumbbell tensile test were conducted under the same conditions as those of Example 19. The results were as follows. The adhesive strength at an ambient temperature was 28 MPa, the adhesive strength at a hot temperature of 80°C was 23 MPa, the maximum tensile strength was 31 MPa, and the elongation was 35%.

While embodiments and examples of the present invention have been described above, it should be understood that the embodiments and the examples presented above do not limit the invention recited in the claims. Furthermore, it should be noted that all the combinations of the features described in the embodiments and the examples are not necessarily essential for achieving the object of the invention and that various modifications may be made without departing from the technical spirit of the present invention.

## Claims

1. A two-part acrylic adhesive composition comprising, as essential components:
(A) a urethane (meth)acrylate having a backbone including a low-crystallinity polytetramethylene glycol;
(B) a polymerizable vinyl monomer;
(C) an organic peroxide; and
(D) a reducing agent.

2. The two-part acrylic adhesive composition according to Claim 1, wherein the component (A) is present in an amount of 5 to 60 parts by weight, the component (B) is present in an amount of 40 to 90 parts by weight, the component (C) is present in an amount of 0.05 to 10 parts by weight, and the component (D) is present in an amount of 0.01 to 10 parts by weight, per 100 parts by weight of a total weight of the component (A) and the component (B).

3. The two-part acrylic adhesive composition according to Claim 1 or 2, wherein the polymerizable vinyl monomer that serves as the component (B) includes acryloylmorpholine.

4. The two-part acrylic adhesive composition according to Claim 1 or 2, wherein the polymerizable vinyl monomer that serves as the component (B) includes a methacrylic acid.

5. The two-part acrylic adhesive composition according to Claim 1 or 2, wherein the polymerizable vinyl monomer that serves as the component (B) includes a (meth)acrylic acid ester containing a phosphoric acid ester group.

6. A cured product of the two-part acrylic adhesive composition according to any one of Claims 1 to 5.

7. An article comprising the cured product of the two-part acrylic adhesive composition according to Claim 6, the cured product being a constituent element of the article.
